# EUROPÄISCHE PATENTANMELDUNG

(11) **EP 0 900 950 A2**
(43) Veröffentlichungstag der Anmeldung: **10.03.1999**
(21) Anmeldenummer: 98123432.1
(22) Anmeldetag: 21.08.1995
(51) Int. Cl.: F16F 15/124

(54) **Schwingungstilger**

(30) Priorität: 06.09.1994 DE 4431772
(62) Teilanmeldung aus: 95113131.7
(71) Anmelder: ContiTech Formteile GmbH, 30453 Hannover (DE)
(72) Erfinder: Gassen, Achim, 50678 Köln (DE); Vossenkuhl, Helmut, 50733 Köln (DE); Koos, Wolgang, 52066 Aachen (DE)
(74) Vertreter: Turi, Michael, Dipl.-Phys.

(57) **Zusammenfassung**

Die Erfindung betrifft einen Schwingungstilger zum Tilgen von Schwingungen unterschiedlicher Richtungen, mit einem Teil zur Befestigung an einer Hauptmasse, einer Tilgermasse und einem Mittel zum elastischen Koppeln der Tilgermasse an dem Befestigungsteil mit wenigstens einem auf Druck und Schub beanspruchbaren elastischen Koppelelement. Das bzw. die elastische(n) Koppelelement(e) ist (sind) relativ zu einer Axialrichtung des Schwingungstilgers geneigt. Die geneigte Ausbildung des (der) Koppelelements(e) erlaubt es, die Steifigkeiten und damit die Tilgermassen-Eigenfrequenzen in Abstandsrichtung und einer Richtung senkrecht dazu weitgehend unabhängig voneinander konstruktiv auszulegen. Dies ermöglicht eine besonders vielseitige, raum-, gewichts- und kostensparende Verwendung des Schwingungstilgers.

## Beschreibung

Die Erfindung betrifft einen Schwingungstilger.

Ein System zweier elastisch gekoppelter Massen, bei dem eine äußere Störung oder "Erregung" auf eine der Massen wirkt, führt erzwungene Koppelschwingungen mit der Erregerfrequenz aus. Ein besonderer Fall liegt dann vor, wenn die Eigenfrequenz der Schwingung des durch die zweite Masse und das elastische Koppelmittel gebildeten Schwingers gleich der Erregerfrequenz ist. Dann schwingt - im idealisierten Fall ohne Dämpfung - nur die zweite Masse (die sog. Tilgermasse), und zwar gegensinnig zur Erregung, während die Schwingung der ersten Masse (der sog. Hauptmasse) vollständig getilgt ist. Im realen Fall mit Dämpfung ist die Schwingungstilgung nicht vollständig, sie äußert sich dann als Schwingungsminderung über ein Band von Erregerfrequenzen.

Eine Schwingungstilgung dieser Art wendet man zum Beispiel bei Kraftfahrzeugen an, um störende Resonanzschwingungen einer Hauptmasse, etwa eines Getriebeteils oder des Fahrzeugaufbaus, zu mindern. Hierzu verwendet man Schwingungstilger mit auf die Eigenfrequenz der Hauptmasse abgestimmter Eigenfrequenz.

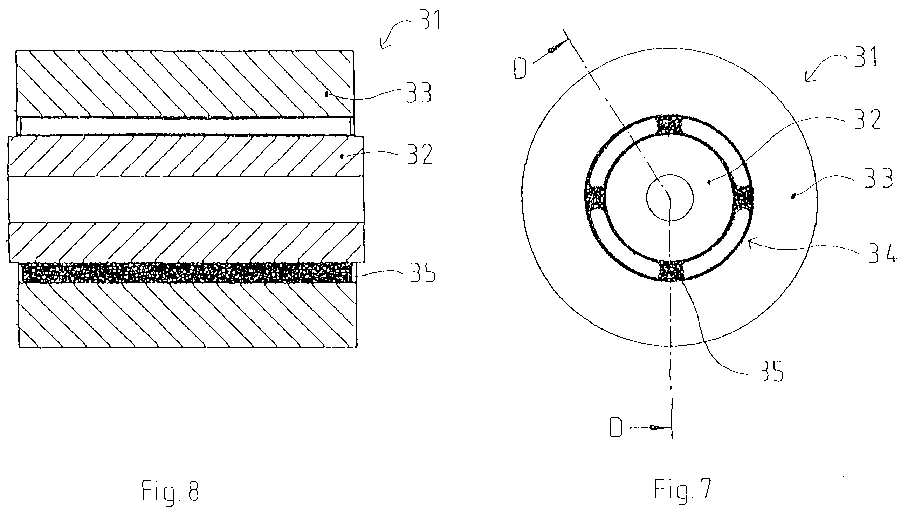

Ein im Stand der Technik bekannter Schwingungstilger 31 ist in den Figuren 7 und 8 dargestellt. Er besteht aus einer kreiszylindrischen koaxialen Anordnung eines Befestigungsteils in Form einer Hülse 32, einer Tilgermasse 33 und einem Koppelmittel in Form einer Elastomerfeder 34. Diese umfaßt als elastische Koppelelemente mehrere longitudinale Elastomerstege 35 mit rechteckiger Stegfläche, die hochkant in Radialrichtung zwischen der Hülse 32 und der Tilgermasse 33 stehen.

Der Schwingungstilger 31 kann lineare Schwingungen, also z.B. Biegeschwingungen des die Hauptmasse bildenden Fahrzeugteils, in Axialrichtung sowie in den Radialrichtungen tilgen. Die Stege 35 werden bei Radialschwingungen auf Druck, bei Axialschwingungen hingegen auf Schub beansprucht. Ihre Drucksteifigkeit und Schubsteifigkeit stehen bei einem gegebenen Elastomermaterial in einem festen Verhältnis zueinander; im allgemeinen ist die Drucksteifigkeit größer als die Schubsteifigkeit. Da Steifigkeit und Eigenfrequenz zueinander proportional sind, stehen die Eigenfrequenzen des Schwingungstilgers in Radial- und Axialrichtung in einem entsprechenden festen Verhältnis; im allgemeinen ist die Eigenfrequenz in Radialrichtung höher als diejenige in Axialrichtung. Dieses feste Verhältnis macht es praktisch unmöglich, den Schwingungstilger auf in Radial- und in Axialrichtung vorgegebene, zu tilgende Frequenzen konstruktiv einzustellen. Er ist daher nur zum Tilgen von entweder Axial- oder Radialschwingungen optimal geeignet.

Die deutsche Patentschrift 29 33 586 offenbart einen Schwingungstilger, der zum Tilgen von Torsionsschwingungen in Radialrichtung vorgesehen ist. Um den Schwingungstilger bezüglich der Torsionsschwingungen relativ steif zu gestalten, weist er Versteifungselemente in Form von Blechkörpern auf.

Die deutsche Patentschrift 39 37 669 offenbart eine Drehschwingungstilger (Torsionsschwingungstilger), dessen Federsteifigkeit und damit dessen Eigenfrequenz mit zunehmender Drehzahl zunimmt, bedingt durch eine Fliehkraftverstellung der Federelemente.

Die Erfindung geht von dem technischen Problem aus, einen Schwingungstilger zu schaffen, bei dem Eigenfrequenzen für unterschiedliche, etwa zueinander senkrechte Linear-Schwingungsrichtungen, besser eingestellt werden können.

Dieses Problem wird erfindungsgemäß durch einen Schwingungstilger gelöst, mit:
a) einem Teil zur Befelstigung an einer Hauptmasse;
b) einer Tilgermasse; und
c) einem Mittel zum elastischen Koppeln von Befestigungsteil und Tilgermasse
   c1) mit wenigstens einem auf Druck und Schub beanspruchbaren elastischen Koppelelement,
   c2) wobei das (die) elastische(n) Koppelelement(e) relativ zur Richtung des Abstands zwischen Befestigungsteil und Tilgermasse geneigt ist (sind), wobei die Neigung (α, β) des (der) Koppelelements(e) so gewählt ist, daß das Verhältnis der Eigenfrequenzen von Schwingungen der Tilgermasse in Abstandsrichtung und in einer hierzu senkrechten Richtung einen vorgegebenen Wert hat.

Mit "Richtung des Abstands" zwischen Befestigungsteil und Tilgermasse" ist insbesondere die Abstandsrichtung am Ort des Koppelelements gemeint. Ist der Schwingungstilger z.B. in einer ebenen Geometrie ausgeführt, bei der die Tilgermasse und das Befestigungsteil sandwichartig in parallelen Ebenen liegen, so verläuft die Abstandsrichtung überall im Schwingungstilger in dieselbe Richtung, nämlich senkrecht zu diesen Ebenen. Es gibt hier also nur eine "globale" Abstandsrichtung. Hat der Schwingungstilger hingegen z.B. eine im wesentlichen zylindrische oder im Querschnitt im wesentlichen kreisförmige Geometrie, bei der zum Beispiel das Befestigungsteil und die Tilgermasse koaxial angeordnete, im wesentlichen kreiszylindrische Körper sind, so ist die Abstandsrichtung jeweils die Radialrichtung am Ort des Koppelelements. Es gibt hier also genaugenommen verschiedene "lokale" Abstandsrichtungen. Diese entsprechen sich jedoch geometrisch und damit auch in ihren Eigenfrequenzen, so daß in zylindrischer oder Kreisgeometrie unter "Abstandsrichtung" insbesondere die "Radialrichtung" des Schwingungstilgers verstanden werden kann. Die Richtung senkrecht dazu ist dazu die Axialrichtung.

Durch die geneigte Anordnung des (der) Koppelelements(e) liegt bei Beanspruchungen in Abstandsrichtung eine schräge Druckflanke vor. Verringert man z.B. den Abstand zwischen Befestigungsteil und Tilgermasse, so drückt man das Koppelelement nicht nur (wie im Stand der Technik) zusammen, sondern vergrößert auch dessen Neigung zur Abstandsrichtung. Das Koppelelement erfährt also eine kombinierte Druck-Schub-Beanspruchung. Die Steifigkeit ist hierfür geringer als bei reiner Druckbeanspruchung. Durch die Wahl einer bestimmten Neigung läßt sich die Steifigkeit in Abstandsrichtung weitgehend unabhängig von derjenigen senkrecht dazu konstruktiv einstellen.

Bei Zylinder- bzw. Kreisgeometrie können die Koppelelemente auf zwei verschiedene Arten relativ zur Radialrichtung geneigt sein, nämlich einerseits in einer Radialebene liegend geneigt (sog. Radialneigung) oder anderseits aus einer Radialebene herausgeneigt (sog. Axialneigung). Eine Kombination dieser beiden Arten ist möglich.

Der erfindungsgemäße Schwingungstilger hat somit folgende Vorteile:
- seine Schwingungstilgungsfrequenzen in Abstandsrichtung und senkrecht dazu sind konstruktiv unabhängig voneinander auslegbar;
- er ist dadurch vielfältiger einsetzbar;
- er erlaubt eine besonders wirksame Schwingungstilgung;
- indem er gesonderte Schwingungstilger für verschiedene Schwingungsrichtungen unnötig macht, ermöglicht er eine Kosten- und Gewichtsersparnis und erlaubt insgesamt eine Vereinfachung eines Schwingungstilgungssystems; und
- er ist einfach konstruiert.

Meistens sollen Schwingungen getilgt werden, die in den verschiedenen Richtungen die gleichen Frequenzen haben. Ein solcher Fall kann z.B. bei einem Leichtnutzfahrzeug-Chassis vorliegen, das im Resonanzfrequenzbereich ein Gemisch von Schwingungen in allen drei zueinander senkrechten Richtungen zeigt. Vorzugsweise ist daher die Neigung der Koppelelemente so gewählt, daß die Eigenfrequenzen von Schwingungen der Tilgermasse in Abstandsrichtung und einer hierzu senkrechten Richtung im wesentlichen gleich sind (Anspruch 2).

Grundsätzlich können die Koppelelemente jede beliebige Form haben, die eine geneigte Anordnung erlaubt, also z.B. eine Säulenform. Vorzugsweise haben sie eine stegähnliche Form (Anspruch 3). Mit dieser Formgebung kann man hohe Steifigkeiten erzielen.

Bei stegförmigen Koppelelementen kann man die Neigung zur Abstandsrichtung vorteilhaft auf zwei verschiedene Arten realisieren: einerseits durch eine Verkippung der Stege (Anspruch 4) (dies entspricht bei Zylinder- bzw. Kreisgeometrie der oben genannten Radialneigung), andererseits durch eine Versetzung von dem Befestigungsteil und der Tilgermasse benachbarten Stegkanten in Längsrichtung des Stegs (Anspruch 5) (dies entspricht bei Zylinder- bzw. Kreisgeometrie der oben genannten Axialneigung). Mit "Verkippung" ist eine Schrägstellung der Ebene des hochkant zwischen Befestigungselement und Tilgermasse stehenden Stegs relativ zur Abstandsrichtung gemeint. Bei der "Versetzung" liegt die Stegebene vorteilhaft parallel zur Abstandsrichtung. Es ist jedoch auch möglich, beide Neigungsarten zu kombinieren, also einen verkippten Steg mit versetzten Stegkanten vorzusehen.

Grundsätzlich können die Stege mit versetzten Stegkanten in einer Projektion senkrecht zur Stegebene eine beliebige Viereckform haben, vorausgesetzt die Mittellinie des Vierecks verläuft geneigt zur Abstandsrichtung. Möglich ist also z.B. die Form eines ungleichschenkligen Trapezes. Aus Symmetriegründen werden jedoch im wesentlichen parallelogrammförmige Stege bevorzugt (Anspruch 6).

Falls zur konstruktiven Einstellung einer bestimmten Tilgungsfrequenz in Abstandsrichtung eine besonders schräge Druckflanke benötigt wird, wählt man die Versetzung vorzugsweise so groß, daß die beiden Stegkanten in Abstandsrichtung höchstens geringfügig überlappen (Anspruch 7). Die Stege können dann einer schräggestellten Säule ähneln.

Wegen der geneigten Anordnung eines Koppelelements erzeugt eine in Abstandsrichtung angelegte Kraft auch eine Kraftkomponente senkrecht dazu. Daher sind Schwingungsfreiheitsgrade in Abstandsrichtung und senkrecht dazu nicht entkoppelt: Regt man eine Schwingung der Tilgermasse z.B. in Abstandsrichtung an, so wird sich auch eine Schwingung senkrecht dazu ausbilden. Um dies zu vermeiden, ist vorzugsweise jedem Koppelelement ein weiteres Koppelelement mit entgegengesetzter Neigung zugeordnet (Anspruch 8). Durch diese Maßnahme kompensieren sich die senkrecht wirkenden Kraftkomponenten, so daß eine Schwingung z.B. in Abstandsrichtung keine andere Schwingung mehr anregt. Die Schwingungsfreiheitsgrade sind dann entkoppelt.

Vorzugsweise ist der Schwingungstilger in einer ebenen Geometrie ausgeführt, wobei das Befestigungsteil und die Tilgermasse sandwichartig mit dazwischengeschaltetem Koppelmittel angeordnet sind (Anspruch 9). In dieser Bauform ist es möglich, den Schwingungstilger besonders flach auszubilden. Vorzugsweise sind hierbei mehrere Koppelelemente nebeneinander angeordnet (Anspruch 10). Zur Freiheitsgradentkopplung sind die Koppelelemente vorzugsweise mit paarweise entgegengesetzten Neigungen angeordnet, z.B. in der Abfolge: +α, -α, -α, +α. Bei stegförmigen Koppelelementen richtet man die Steglängsachsen vorteilhaft parallel aus. Man kann auch zwei Gruppen parallel ausgerichteter Stege mit zueinander senkrechten Gruppenrichtungen vorsehen.

Besonders bevorzugt ist der Schwingungstilger im wesentlichen in einer Zylindergeometrie, vorzugsweise einer Kreiszylindergeometrie ausgeführt, wobei das Befestigungsteil und die Tilgermasse im wesentlichen koaxial mit dazwischengeschaltetem Koppelmittel angeordnet sind (Anspruch 11). Diese Bauform erlaubt einerseits eine besonders kompakte Ausführung und läßt andererseits eine Verwendung an einem drehenden Maschinenteil, z.B. einer Welle, zu, um mit der Drehung einhergehende Biegeschwingungen zu tilgen.

Wie oben bereits erwähnt, sind die Koppelelemente vorteilhaft radial- und/oder axialgeneigt (Anspruch 12).

Der kreiszylindrische Schwingungstilger hat - wie gesagt - aus Symmetriegründen gleiche Eigenfrequenzen für Schwingungen in Radialrichtung (d.h. genauer gesagt, in allen Radialrichtungen). Bevorzugt wird daher die Neigung der Koppelelemente so gewählt, daß die Eigenfrequenzen von Schwingungen in Radialrichtung und in Axialrichtung im wesentlichen gleich sind (Anspruch 13). Auf diesen Schwingungstilger treffen die oben genannten Vorteile in besonders ausgeprägter Weise zu.

Vorteilhaft liegt das Befestigungsteil radial innerhalb der Tilgermasse (Anspruch 14). Dies erlaubt eine einfache Befestigung an stabförmigen Maschinenteilen. Vorzugsweise haben das Befestigungsteil, das Koppelmittel und/oder die Tilgermasse im wesentlichen einen kreisringförmigen Querschnitt (Anspruch 15).

Vorteilhaft sind bei der zylindrischen Bauform mehrere Koppelelemente nebeneinander angeordnet (Anspruch 16). Vorzugsweise sind deren Neigungen abwechselnd entgegengesetzt. Hierbei muß man bedenken, daß die Bezugsgröße für "Neigung" in der Zylindergeometrie die für jedes Koppelelement unterschiedliche Radialrichtung ist und daher im obigen Sinn "entgegengesetzte Neigungen" tatsächlich nicht vollkommen entgegengesetzt sind. Benachbarte "entgegengesetzt geneigte" Koppelelemente bewirken folglich noch keine vollständige Freiheitsgradentkopplung. Diese kann man vorteilhaft dadurch erreichen, daß man jedem Koppelelement radial gegenüberliegend ein weiteres Koppelelement mit entgegengesetzter Neigung zuordnet.

Bei dem zylindrischen Schwingungstilger sind stegförmige Koppelelemente mit der Längsrichtung der Stege in Axialrichtung besonders vorteilhaft (Anspruch 17).

Vorteilhaft bestehen die Koppelelemente im wesentlichen aus einem elastomeren Material, vorzugsweise aus Gummi (Anspruch 18).

Die Erfindung ist auch auf ein Verfahren zur Herstellung eines Schwingungstilger gerichtet, welcher umfaßt:
a) ein Teil zur Befestigung an einer Hauptmasse;
b) eine Tilgermasse und
c) ein Mittel zum elastischen Koppeln von Befestigungssteil und Tilgermasse
   c1) mit wenigstens einem auf Druck und Schub beanspruchbaren elastischen Koppelelement,
   c2) wobei das (die) elastische(n) Koppelelement(e) relativ zur Richtung des Abstands zwischen Befestigungsteil und Tilgermasse geneigt ist (sind),
wobei bei dem Verfahren die Neigung des (der) Koppelelements(e) so gewählt wird, daß sich im Verhältnis der Eigenfrequenzen von Schwingungen der Tilgermasse in Abstandsrichtung und in einer hierzu senkrechten Richtung ein vorgegebener Wert ergibt (Anspruch 19). Der mit dem Verfahren hergestellte Schwingungstilger kann gemäß einer oben genannten Ausgestaltungen ausgebildet sein (Anspruch 20). Bezüglich weiterer Einzelheiten und Vorteile des Verfahrens wird vollinhaltlich auf die obigen Erläuterungen zum Schwingungsteilger in seinen verscheidenen Ausgestaltungen Bezug genommen.

Die Erfindung wird nun anhand von Ausführungsformen und der beigefügten schematischen Zeichnung näher erläutert. In der Zeichnung zeigen:
- Figur 1: eine Seitenansicht einer ersten Ausführungsform, die in ebener Geometrie ausgeführt ist;
- Figur 2: eine Schnittansicht entlang der Linie A-A in Figur 1;
- Figur 3: eine Axialansicht einer zweiten, kreiszylindrischen Ausführungsform mit parallelogrammförmigen Stegen;
- Figur 4: eine Schnittansicht entlang der Linie B-B in Figur 3;
- Figur 5: eine Axialansicht einer dritten, kreiszylindrischen Ausführungsform mit verkippten Stegen; und
- Figur 6: eine Schnittansicht entlang der Linie C-C in Figur 5.
Die Figuren 7 und 8 veranschaulichen - wie bereits eingangs erwähnt wurde - einen bekannten Schwingungstilger des Standes der Technik, wobei Figur 7 eine Axialansicht und Figur 8 eine Schnittansicht entlang der Linie D-D von Figur 7 ist.

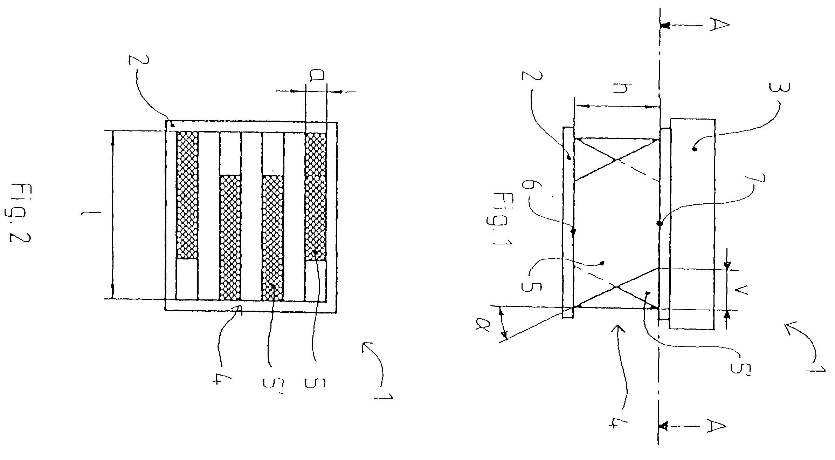

Der ebene Schwingungstilger 1 gemäß Figuren 1 und 2 umfaßt eine Platte 2 zur Befestigung an einer (nicht gezeigten) Hauptmasse, z.B. einem Chassis eines Nutzfahrzeugs, eine Tilgermasse 3 und ein elastisches Koppelmittel, hier eine Elastomerfeder 4.

Die Befestigungsplatte 2 und die Tilgermasse 3 sind sandwichartig mit dazwischengeschalteter Elastomerfeder 4 angeordnet. Das heißt, sie kehren einander ebene, parallele, sich deckende Flächen ungefähr gleicher Form und Größe zu. Die "Abstandsrichtung" verläuft senkrecht zu diesen Flächen.

Die Elastomerfeder 4 umfaßt mehrere elastische Koppelelemente, hier Stege 5 aus Elastomermaterial. Sie haben jeweils die Form eines flachen Parallelepipeds mit parallelogrammförmiger großer Seitenfläche (sog. "Stegebene") und rechteckförmigen kleinen Seitenflächen (sog. "Stegkanten"). Der Parallelogramm- bzw. Neigungswinkel α, der die Abweichung von einem Rechteck beschreibt, beträgt bevorzugt zwischen 5° und 70°, hier ungefähr 25°. Das Verhältnis von Höhe h zu Breite a des Stegs 5 beträgt bevorzugt zwischen 1 und 10, hier ungefähr 4, und dasjenige von Länge l zu Höhe h beträgt bevorzugt zwischen 1 und 20, hier ungefähr 2. Aufgrund der Parallelogrammform ist eine lange Stegkante 6 relativ zur anderen langen Stegkante 7 in Steglängsrichtung versetzt. Das Verhältnis von Versetzungslänge v zu Steglänge 1 liegt bevorzugt zwischen 0,1 und 0,8. Werte größer als 0,5 bedeuten, daß die Stegkanten 6 und 7 in senkrechter Projektion nicht mehr überlappen. Im hier gezeigten Fall relativ großer Überlappung beträgt der Wert hingegen nur ungefähr 0,25.

Die Stege 5 verlaufen hochkant längs der Befestigungsplatte 2 und der Tilgermasse 3, die Stegebenen sind also parallel zur bzw. in Abstandsrichtung orientiert und die Stegkanten 6, 7 grenzen an die Befestigungsplatte 2 bzw. die Tilgermasse 3. Die einzelnen Stegebenen sind parallel zueinander und fluchten in einer senkrechten Projektion. Jedem Steg 5 mit Winkel α ist benachbart ein Steg mit entgegengesetztem Winkel -α zugeordnet. Benachbarte Paare von Stegen 5 mit entgegengesetzten Winkeln sind wiederum einander entgegengesetzt orientiert, so daß sich eine zu einer Mittelebene der Elastomerfeder 4 symmetrische Steganordnung mit einer Winkelabfolge +α, -α, -α, +α ergibt.

Durch diese symmetrische Anordnung von entgegengesetzt geneigten Stegen 5 sind Kräfte in Abstandsrichtung, in Steglängsrichtung und senkrecht dazu sowie Drehmomente um diese Richtungen vollständig entkoppelt. Zum Beispiel regt eine Schwingung in Abstandsrichtung keine Schwingung in einer anderen Richtung an.

Die parallelogrammförmigen Stege 5 stellen geneigte Koppelelemente mit Neigungswinkel α relativ zur Abstandsrichtung dar. Sie werden bei Beaufschlagung in Abstandsrichtung auf Druck und Schub beansprucht, woraus eine Erniedrigung der Federsteifigkeit - im Vergleich zu den rechtwinkligen Stegen im Stand der Technik - resultiert. Je größer man die Neigung wählt, desto größer wird der Schubanteil und entsprechend kleiner die Steifigkeit. Hingegen ändert sich hierbei die Steifigkeit in Steglängsrichtung kaum. Durch Auswahl eines bestimmten Neigungswinkels α bei der Konstruktion des Schwingungstilgers kann man somit die Steifigkeiten und damit die Eigenfrequenzen in Abstandsrichtung und in Steglängsrichtung in weiten Grenzen unabhängig voneinander, und damit insbesondere auch gleich einstellen.

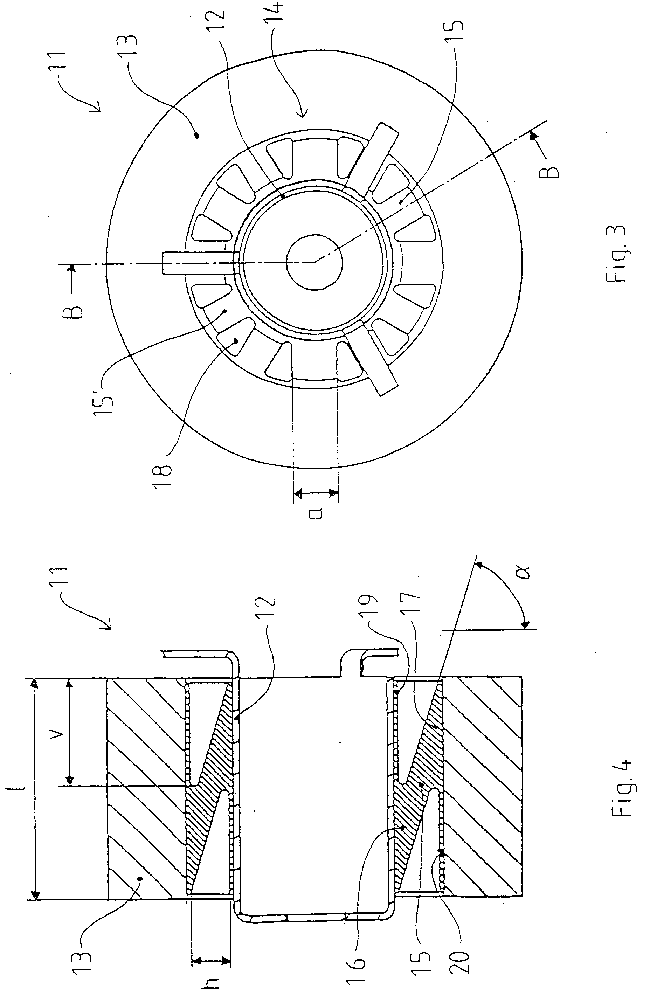

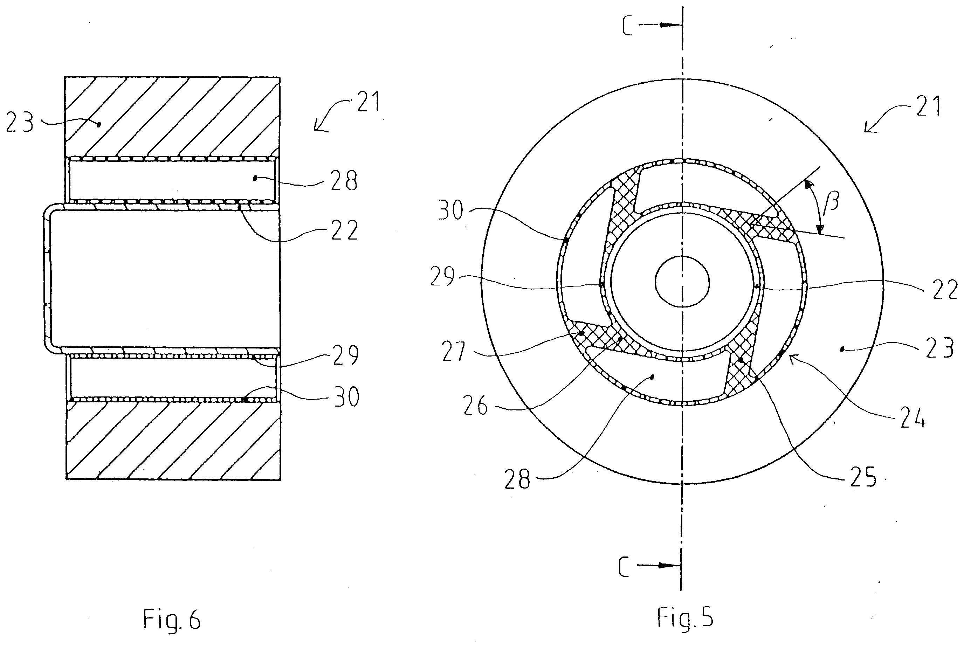

Den in kreiszylindrischer Geometrie dargestellten Schwingungstilger 11 gemäß Figuren 3 und 4 kann man sich im wesentlichen dadurch entstanden denken, daß man den ebenen Schwingungstilger 1 gemäß Figuren 1 und 2 entlang der Steglängsrichtung zu einem Kreiszylinder aufwickelt. Der so erhaltene Schwingungstilger 11 umfaßt in einer koaxialen Anordnung als Befestigungsteil eine im Querschnitt kreisringförmige Innenhülse 12, die von einer kreisringförmigen Tilgermasse 13 unter Zwischenschaltung einer ebenfalls kreisringförmigen Elastomerfeder 14 umgeben ist. Die "Abstandsrichtung" ist hier die (genaugenommen von Ort zu Ort verschiedene) Radialrichtung. Die Koppelelemente sind bei diesem Schwingungstilger 11 axialgeneigt.

Die Elastomerfeder 14 hat zusätzlich zwei zylindermantelförmige Halteflächen 19, 20 aus Elastomermaterial, die mit den dazwischenliegenden - die Koppelelemente darstellenden - Stegen 15 ein Elastomerteil bilden. Die innere Haltefläche 19 umgibt die Innenhülse 12, die äußere Haltefläche 20 schmiegt sich an die radial innere Oberfläche der Tilgermasse 13 an. Die Innenhülse 12 kann auch entfallen, wobei dann die innere Haltefläche 19 ihre Funktion übernimmt.

Die große Seitenfläche der Stege 15 ist - wie bei den Figuren 1 und 2 - parallelogrammförmig. Allerdings ist der Parallelogrammwinkel α hier so groß, daß die innere und äußere Stegkante 16, 17, derart versetzt sind, daß sie gerade nicht mehr überlappen. Das Verhältnis von Versetzung v zur Gesamtlänge 1 beträgt ungefähr 0,5.

Die Stege 15 sind mit ihrer Längsrichtung (in Axialrichtung) hochkant stehend außen auf der inneren Haltefläche 19 angeordnet. Die Stegebenen sind also parallel zur jeweiligen Abstandsrichtung. Zwischen zwei benachbarten Stegen 15 verlaufen im Querschnitt dreieck- oder trapezförmige Durchstiche 18. Die Zuordnung von Stegen mit entgegengesetzter Neigung unterscheidet sich von derjenigen gemäß der Figuren 1 und 2: In Umfangsrichtung haben die Stege 15 die abwechselnde Winkelfolge +α, -α, +α, -α. Da sich jedoch die Abstandsrichtung von Steg zu Steg ändert, haben benachbarte Stege 15 nicht vollständig entgegengesetzte Neigungen (in derselben Ebene) und bilden daher nicht die für eine Entkopplung der Freiheitsgrade einander zugeordneten Koppelelemente. Für die Freiheitsgradentkopplung sorgt jeweils ein in Radialrichtung gegenüberliegender Steg; dieser hat eine genau entgegengesetzte Neigung. In Figur 3 ist ein solches Stegpaar mit 15' und 15'' gekennzeichnet.

Die oben genannten bevorzugten Abmessungen gelten auch für die zylindrischen Ausführungsformen. Das Verhältnis der Höhe h der Stege 15 zum Außendurchmesser der Hülse 12 (der hier 40 mm beträgt) liegt vorzugsweise zwischen 0,05 bis 1, hier bei ungefähr 0,4.

Durch eine bestimmte Wahl der Neigungswinkel α kann man wiederum die Steifigkeit und damit die Eigenfrequenz in den Radialrichtungen in weiten Grenzen unabhängig von denen in Axialrichtung konstruktiv einstellen. In der in Figuren 3 und 4 gezeigten Ausführungsform sind die Steifigkeiten und Eigenfrequenzen gleich eingestellt. Dadurch kann man mit einem Schwingungstilger 11 Resonanzschwingungen einer Hauptmasse in allen möglichen Schwingungsrichtungen tilgen, wobei die verschiedenen Schwingungsfreiheitsgrade vollständig entkoppelt sind.

Der Schwingungstilger 21 gemäß Figuren 5 und 6 hat radialgeneigte Koppelelemente, entspricht aber - bis auf die Form und Anordnung der die Koppelelemente bildenden Stege 25 - weitgehend dem Schwingungstilger gemäß Figuren 3 und 4. Für die Hülse 22, die Tilgermasse 23, die Elastomerfeder 24 und die Halteflächen 29, 30 gilt daher im wesentlichen das dort Gesagte.

Die Stege 25 haben hingegen nicht parallelogrammförmige, sondern rechteckförmige Stegebenen. Die Neigung wird hier jeweils durch eine Verkippung der Stegebenen aus der Abstandsrichtung (d.h. der Radialrichtung) erreicht. Der Verkippungswinkel β beträgt vorzugsweise zwischen 5° und 90°, hier ungefähr 40°. Benachbarte Stege 25 haben hier jeweils den gleichen Verkippungswinkel β. Somit ergeben sich Durchstiche 28 mit sichelförmigem Querschnitt.

Jedem Steg 25 liegt ein weiterer Steg 25 radial gegenüber. Die beiden Stege 25 haben zwar den gleichen Verkippungswinkel β relativ zur Abstandsrichtung. Da sich für sie aber die Abstandsrichtungen selbst um 180° unterscheiden, bedeutet "gleicher Verkippungswinkel β", daß die beiden Stege tatsächlich entgegengesetzt geneigt sind. Somit ist ebenfalls für eine Entkopplung der Freiheitsgrade gesorgt. Man kann darüber hinaus die Elastomerfeder 24 in Axialrichtung in mehrere Abschnitte mit jeweils entgegengesetzten Neigungen β aufteilen.

Durch eine geeignete Wahl des Verkippungswinkels β kann die Radialsteifigkeit wie bei dem Schwingungstilger gemäß Figuren 3 und 4 weitgehend unabhängig von der Axialsteifigkeit eingestellt werden.

## Patentansprüche

1. Schwingungstilger (11, 21) zum Tilgen von Schwingungen unterschiedlicher Richtungen, mit:
a) einem Teil zur Befestigung an einer Hauptmasse;
b) einer Tilgermasse (13, 23); und
c) einem Mittel zum elastischen Koppeln von Befestigungsteil und Tilgermasse
c1) mit einem oder mehreren auf Druck und Schub beanspruchbaren elastischen Koppelelementen,
c2) das/die relativ zu einer Axialrichtung des Schwingungstilgers (11, 21) geneigt ist/sind, wobei die Neigung des/der Koppelelements/e so gewählt ist, daß das Verhältnis der Eigenfrequenzen von Schwingungen der Tilgermasse (13, 23) in Axialrichtung und in Radialrichtung einen vorgegebenen Wert hat.

2. Schwingungstilger nach Anspruch 1, bei dem das/die Koppelelement/e eine stegähnliche Form hat/haben, wobei die Längsrichtung des Stegs (15) in Axialrichtung verläuft.

3. Schwingungstilger nach Anspruch 2, bei dem der ein Koppelelement bildende Steg (25) außerdem eine Neigung (β) in Umfangsrichtung aufweist.

4. Schwingungstilger nach einem einem der vorhergehenden Ansprüche, bei dem die Neigung des/der Koppelelements/e so gewählt ist, daß die Eigenfrequenzen von Schwingungen der Tilgermasse (13, 23) in Axialrichtung und in Radialrichtung im wesentlichen gleich sind.

5. Schwingungstilger nach einem der vorhergehenden Ansprüche, bei dem das Befestigungsteil (12, 22) und die Tilgermasse (13, 23) im wesentlichen koaxial mit dazwischengeschaltetem Koppelmittel angeordnet sind.

6. Schwingungstilger nach Anspruch 5, bei dem das Befestigungsteil (12, 22) radial innerhalb der Tilgermasse (13, 23) liegt.

7. Schwingungstilger nach Anspruch 5 oder 6, bei dem das Befestigungsteil (12, 22), das Koppelmittel und/oder die Tilgermasse (13, 23) im wesentlichen einen kreisringförmigen Querschnitt haben.

8. Schwingungstilger (1) mit im wesentlichen ebener Geometrie zum Tilgen von Schwingungen unterschiedlicher Richtungen, mit:
a) einem Teil zur Befestigung an einer Hauptmasse;
b) einer Tilgermasse (3); und
c) einem Mittel zum elastischen Koppeln von Befestigungsteil und Tilgermasse
c1) mit einem oder mehreren auf Druck und Schub beanspruchbaren elastischen Koppelelementen,
c2) die relativ zur Richtung des Abstands zwischen Befestigungsteil und Tilgermasse (3) geneigt ist/sind, wobei die Neigung des/der der Koppelelements/e so gewählt ist, daß das Verhältnis der Eigenfrequenzen von Schwingungen der Tilgermasse (3) in Abstandsrichtung und in einer hierzu senkrechten Richtung einen vorgegebenen Wert hat.

9. Schwingungstilger nach Anspruch 8, bei dem das/die Koppelelement/e eine stegähnliche Form hat/haben.

10. Schwingungstilger nach Anspruch 8 oder 9, bei dem das Befestigungsteil und die Tilgermasse (3) sandwichartig mit dazwischengeschaltetem Koppelmittel angeordnet sind.

11. Schwingungstilger nach einem der Ansprüche 8 bis 10, bei dem die Neigung (α) des/der Koppelelement/e so gewählt ist/sind, daß die Eigenfrequenzen von Schwingungen der Tilgermasse (3) in Abstandsrichtung und in einer hierzu senkrechten Richtung im wesentlichen gleich sind.

12. Schwingungstilger nach einem der Ansprüche 2 bis 7, 9 bis 11, bei dem die Neigung (α) des/der Koppelelements/e dadurch erzielt ist, daß dem Befestigungsteil und der Tilgermasse (3, 13, 23) gegenüberliegende Stegkanten (6, 7) in Längsrichtung des Stegs (5) versetzt sind.

13. Schwingungstilger nach Anspruch 12, bei dem der Steg (5) im wesentlichen parallelogrammförmig ist.

14. Schwingungstilger nach Anspruch 12 oder 13, bei dem die beiden versetzten Stegkanten höchstens geringfügig überlappen.

15. Schwingungstilger nach einem der vorhergehenden Ansprüche, bei dem jedem Koppelelement ein weiteres Koppelelement mit entgegengesetzter Neigung (α) zugeordnet ist.

16. Schwingungstilger nach Anspruch 15, bei dem mehrere Koppelelemente oder jeweils zwei Koppelelemente nebeneinander mit abwechselnd entgegengesetzten Neigungen (α) angeordnet sind.

17. Schwingungstilger nach einem der vorhergehenden Ansprüche, bei dem die Koppelelemente im wesentlichen aus einem elastomeren Material, vorzugsweise Gummi, bestehen.
